# EUROPÄISCHE PATENTSCHRIFT

(11) **EP 0 644 840 B1**
(45) Veröffentlichungstag und Bekanntmachung des Hinweises auf die Patenterteilung: **31.01.1996**
(21) Anmeldenummer: 93912598.5
(22) Anmeldetag: 16.06.1993
(51) Int. Cl.: B60V 1/16

(54) **LUFTKISSENFAHRZEUG**
HOVERCRAFT
VEHICULE A COUSSIN D'AIR

(30) Priorität: 17.06.1992 DE 4219830
(43) Veröffentlichungstag der Anmeldung: 29.03.1995
(73) Patentinhaber: ABS AIRCRAFT AG, CH-9403 Goldach (CH)
(72) Erfinder: BLUM, Albert, CH-2072 St-Blaise (CH); STIEGLER, Hartmut, D-4050 Mönchengladbach 1 (DE)
(74) Vertreter: Patentanwälte Lippert, Stachow, Schmidt & Partner
(86) Internationale Anmeldenummer: DE9300527
(87) Internationale Veröffentlichungsnummer: WO9325423

(56) Entgegenhaltungen:
- AU-A- 62 215
- FR-A- 2 187 586
- FR-A- 2 345 327
- GB-A- 1 236 571

## Beschreibung

Die Erfindung betrifft ein Luftkissenfahrzeug mit wenigstens einem Kompressortriebwerk zur Erzeugung eines Luftkissens, bei dem das Luftkissen seitlich durch eine umlaufende elastische Schürze, bestehend aus einem Back Skirt und einem Finger Skirt begrenzt wird, deren seitliche, parallel zueinander liegenden Bereiche in jeweils zwei unabhängig voneinander verlagerbare Abschnitte unterteilt und mittels Zugseile die an Schürzen-Segmenten des Finger Skirts angreifen, verlagerbar sind und bei dem als statische Trimmung der Auftriebsschwerpunkt des Luftkissens gegenüber dem Massenschwerpunkt durch gruppenweises seitliches Verstellen der Finger Skirts verschoben wird.

Luftkissenfahrzeuge sind üblicherweise mit einem Kompressor zur Erzeugung des benötigten Luftkissens innerhalb einer Gummischürze und mit wenigstens einem Triebwerk für die Geradeaus- und/oder Kurvenfahrt versehen. Die Gummischürze besteht aus einer schlauchartig umlaufenden oberen Schürze, einem sogenannten Back Skirt und einem sich daran anschließenden flexiblen fingerartigen Rand, einem sogenannten Finger Skirt. Da diese Begriffe in der Luftkissenfahrzeugtechnik üblich sind, werden diese der Einfachheit halber auch in der nachfolgenden Beschreibung verwendet. Der Finger Skirt ist seitlich elastisch bewegbar und dient als Abdichtungsmanschette gegenüber dem Boden bzw. der Wasseroberfläche. Die Steuerung der Kurvenfahrt erfolgt in der Regel durch seitliche Ablenkung des Luftstrahles, beispielsweise mit einem aus dem Flugzeugbau bekannten Seitenruder.

Bei diesen Luftkissenfahrzeugen entsteht bei einer Verlagerung des Massenschwerpunktes, beispielsweise durch unterschiedliche oder ungleichmäßige Belastung durch Passagiere oder Beladung, eine Neigung der Karosserie um die Längsstabilitätsachse, die Querstabilitätsachse oder um beide Achsen gleichzeitig.

Diese durch die Verschiebung des Massenschwerpunktes bedingte Neigung um eine der Stabilitätsachsen kann im ungünstigsten Fall dazu führen, daß die Gummischürze des Luftkissenfahrzeuges während der Fahrt in das Wasser eintaucht. Die Gummischürze würde in diesem Fall mehr oder weniger stark eingedrückt und der Auftrieb durch das Luftkissen in diesem Bereich verringert. Im Ergebnis taucht das Luftkissenfahrzeug noch tiefer ein und könnte sich sogar überschlagen.

Ein anderer Effekt, der bei der Verlagerung des Massenschwerpunktes auftritt, ist durchaus mit der Wirkung von Seitenwind zu vergleichen. Dieser Effekt entsteht durch den unterschiedlichen Abstand der Gummischürze zum Boden oder der Wasseroberfläche und dem dadurch bedingten unterschiedlichen Abblasen der Luft aus dem Luftkissen. Die dabei entstehende Kraftkomponente schiebt das Luftkissenfahrzeug in Richtung der Verlagerung des Massenschwerpunktes.

Maßnahmen zum Ausgleich der Verlagerung des Massenschwerpunktes bei Luftkissenfahrzeugen sind beispielsweise durch den Einsatz zusätzlicher Trimmgewichte grundsätzlich möglich. Allerdings würden diese Maßnahmen zu einer zusätzlichen Gewichtsbelastung und damit zu einem erhöhten Energieverbrauch führen.

Eine andere Möglichkeit der Trimmung ist aus der FR-A-2 187 586 bekannt geworden, bei der die Finger Skirts jeweils durch Seile mit der Karosserie verbunden sind. Dieses Dokument zeigt ein Luftkissenfahrzeug gemäß dem Oberbegriff des Anspruchs 1. Mit diesen Seilen wird der Maximalabstand der Figer Skirts zur Karosserie festgelegt. Die Verbindungspunkte der Finger Skirts mit den Seilen sind auf jeder Seite durch ein längs verlaufendes Seil miteinander verbunden, so daß der Maximalabstand der Finger Skirts zur Karosserie durch Ziehen am Seil in Längsrichtung verkürzt werden kann. Eine Vergrößerung des Abstandes zur Karosserie ist allerdings nicht möglich, so daß nur eine begrenzte Stellmöglichkeit gegeben ist. Um nun eine möglichst variable Trimmung zu erreichen, sind die Finger Skirts jeweils einer Seite in zwei Gruppen eingeteilt, die durch jeweils ein längs verlaufendes Seil unabhängig voneinander verstellt werden können. Damit sind insgesamt vier Gruppen von Finger Skirts unabhängig voneinander verstellbar.

Die Trimmung eines Luftkissenfahrzeuges ist mit einer solchen Anordnung kompliziert, da durch das Verstellen der Finger Skirts einer Gruppe nur der Auftrieb durch das Luftkissen an dieser Stelle verringert werden kann, d.h., die Verstellung muß dort vorgenommen werden, wo die geringste Belastung vorliegt.

Aus der GB-A-1 235 571 auch ein Luftkissenfahrzeug bekannt geworden, bei dem die Finger Skirts jeweils einer Längsseite gemeinsam seitlich verstellbar sind. Zu diesem Zweck sind alle Finger Skirts mit Zugseilen versehen, die um eine parallel zu den Finger Skirts im Luftkissenfahrzeug angeordnete drehbare Welle gelegt und dort befestigt sind. Eine Drehung der Welle bewirkt dabei eine Verlängerung oder Verkürzung der Zugseile, so daß sich die Finger Skirts entsprechend bewegen. Auf diese Weise kann eine Trimmung des Luftkissenfahrzeuges um die Längsachse erreicht werden. Eine gezielte Trimmung um alle Achsen des Luftkissenfahrzeuges ist mit dieser Lösung nicht möglich.

Der Erfindung liegt die Aufgabe zugrunde, eine statische Trimmung für ein Luftkissenfahrzeug zu schaffen, mit der bei einer Verlagerung des Massenschwerpunktes eine wirksame Trimmung bzw. Lageregelung auch im Stand des Luftkissenfahrzeuges möglich ist und bei der das Luftkissenfahrzeug auch im Stand manövriert werden kann.

Die der Erfindung zugrundeliegende Aufagbestellung wird bei einem Luftkissenfahrzeug der eingangs genannten Art dadurch gelöst, daß daß für jeden unabhängig verlagerbaren Abschnitt jeweils zwei Zugseile vorgesehen sind, die im Abstand zueinander über Umlenkrollen geführt, jeweils an einem Schürzen-Segment des Finger Skirts angreifen und daß sich jedes Zugseil innerhalb des Schürzen-Segmentes in zwei Teilzugseile aufteilt, von denen ein Teilzugseil am Boden des Schürzen-Segmentes und das andere Teilzugseil an der Verbindungsstelle zwischen dem Back Skirt und dem Finger Skirt angreift.

Durch die Erfindung wird die Möglichkeit geschaffen, auf einfache Weise eine Verlagerung des Massenschwerpunktes ausgleichen zu können. Es ist dabei zweckmäßig, den Auftriebsschwerpunkt so lange gegenüber dem Massenschwerpunkt zu verschieben, bis sich beide Kraftkomponenten im Kräfteparallelogramm aufheben. Dadurch wird eine horizontale Lage des Luftkissenfahrzeuges gegenüber dem Boden oder der Wasseroberfläche hergestellt. Dadurch daß die elastische Schürze in jeweils zwei unabhängig voneinander verlagerbare Abschnitte eingeteilt ist, stehen somit vier in den Seitenflächen der Gummischürze des Luftkissenfahrzeuges befindliche Abschnitte zur Verfügung, die eine ausreichende Verstellung des Luftkissens erlauben. Die besondere Anordnung der Zugseile und deren Aufteilung in jeweils zwei Teilzugseile gewährleistet, daß auch bei einer seitlichen Auslenkung, beispielsweise durch Zugkräfte, gewärleistet wird, daß die Form des Schürzen-Segmentes nicht verändert und gleichzeitig ein bessere Lastverteilung erreicht wird.

Als Rückstellelement für den Seilzug ist zwischen der Umlenkrolle und dem Haltepunkt des Seilzuges am Schürzen-Segment eine Druckfeder angeordnet.

Zur Vermeidung einer unkontrollierten Bewegung der Finger Skirts im Falle eines Seilrisses ist zwischen dem Befestigungspunkt des Seilzuges und der Umlenkrolle ein Sicherungsseil befestigt.

In einer Ausgestaltung der Erfindung ist für jeden seitlich verlagerbaren Abschnitt ein Steuerelement vorgesehen.

Das Steuerelement besteht aus einer Seilzugvorrichtung, die einerseits am Finger Skirt angreift und andererseits mit einem Antriebselement versehen ist, das aus einer Seilwinde besteht, die ortsfest unterhalb der Karosserie befestigt ist.

Zum Ausgleich einer Neigung des Luftkissenfahrzeuges um die Querachse werden die Abschnitte einer Seite in eine Richtung, oder die Abschnitte beider parallelen Bereiche gleichsinnig ausgelenkt.

Bei geringfügigen Verlagerungen ist nur einer der Abschnitte auszulenken.

Zum Ausgleich einer kopf- oder hecklastigen Verlagerung des Massenschwerpunktes werden zwei gegenüber befindliche Abschnitte gleich- oder gegensinnig ausgelenkt.

Werden zwei diagonal gegenüberbefindliche Abschnitte gleichsinnig ausgelenkt, so kann eine Neigung des Luftkissenfahrzeuges um die Längs- und die Querstabilitätsachse ausgeglichen werden.

In einer besonderen Variante der Erfindung werden die Abschnitte beider Seiten gleichzeitig nach innen gezogen. Dadurch wird eine kurzzeitige Erhöhung des Innendruckes des Luftkissens erreicht, so daß beispielsweise die Gefahr eines Wellenschlages, der den Bugbereich der Gummischürze eindrücken könnte, beseitigt werden kann.

Ein besonderer Vorteil der Erfindung ist darin zusehen, daß es bei einer ungleichmäßigen Auslenkung der Abschnitte möglich ist, das Luftkissenfahrzeug beispielsweise zu drehen oder seitlich zu verschieben. Eine Drehung nach links kann dadurch hervorgerufen werden, daß die hinteren Abschnitte beidseitig nach außen und die vorderen Abschnitte beidseitig nach rechts, in Fahrtrichtung gesehen, bewegt werden.

Die Erfindung wird nachfolgend an Ausführungsbeispielen näher erläutert. In den zugehörigen Zeichnungen zeigen:
- Fig. 1: eine schematische Draufsicht auf das erfindungsgemäße Luftkissenfahrzeug mit jeweils zwei seitlichen, unabhängig voneinander verlagerbaren Abschnitten des Finger Skirts;
- Fig. 2: einen Schnitt entlang der Linie A-A in Fig. 1 mit einer schematischen Darstellung eines Steuerelementes;
- Fig. 3, 4: die Trimmung des Luftkissenfahrzeuges bei einer Neigung nach vorn;
- Fig. 5, 6: die Trimmung des Luftkissenfahrzeuges bei einer Neigung nach hinten;
- Fig. 7, 8: die Trimmung des Luftkissenfahrzeuges bei einer Fahrzeugneigung nach rechts;
- Fig. 9, 10: die Trimmung des Luftkissenfahrzeuges bei einer Fahrzeugneigung nach links;
- Fig. 11, 12, 13: die Stellung der Abschnitte der Seitenschürzen bei einer Neigung des Luftkissenfahrzeuges nach vorn und nach rechts;
- Fig. 14, 15, 16: die Stellung der Abschnitte der Seitenschürzen bei einer Neigung des Luftkissenfahrzeuges nach vorn und links;
- Fig. 17, 18, 19: die Stellung der Abschnitte der Seitenschürzen bei einer Neigung des Luftkissenfahrzeuges nach hinten und nach rechts; und
- Fig. 20, 21, 22: die Stellung der Abschnitte der Seitenschürzen bei einer Neigung des Luftkissenfahrzeuges nach hinten und nach links.

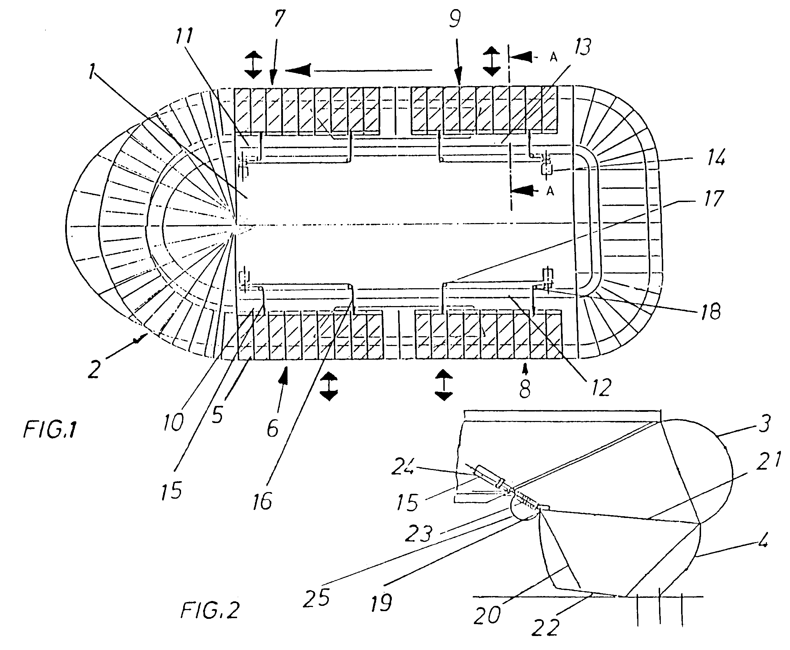

Entsprechend Fig. 1 besteht das Luftkissenfahrzeug aus einer Karosserie 1, die mit einer umlaufenden elastischen Schürze 2 zur Umgrenzung eines Luftkissens versehen ist. Die Erzeugung des Luftkissens erfolgt durch einen nicht dargestellten Kompressor, welcher auf der Oberseite der Karosserie 1, diese durchdringend montiert ist und somit mit dem Raum unter der Karosserie 1, welcher durch die elastische Schürze 2 umgrenzt ist, in Verbindung steht.

Die elastische Schürze 2 ist zweiteilig ausgeführt und besteht aus einem umlaufenden schlauchähnlichen Back Skirt 3, welches unmittelbar mit der Karosserie 1 verbunden ist, sowie einem sich an das Back Skirt 3 anschließenden Finger Skirt 4. Der Finger Skirt 4 besteht aus einzelnen Schürzen-Segmenten 5, die miteinander verbunden sind und seitlich und unter bestimmten Bedingungen (Bodenhindernisse) auch vertikal bewegbar sind.

Gemäß der Erfindung ist der Finger Skirt 4 derart in vier Abschnitte 6, 7, 8, 9 unterteilt, daß die Abschnitte 6, 7, 8, 9 unabhängig voneinander seitlich bewegt werden können. Das heißt, die Schürzen-Segmente 5 eines Abschnittes 6; 7; 8; 9 sind zu einer Gruppe zusammengefaßt, die gemeisam seitlich bewegbar sind.

Aus Fig. 1 ist ersichtlich, daß auf jeder Längsseite des Luftkissenfahrzeuges zwei unabhängig voneinander seitlich bewegbare Abschnitte 6, 7, 8, 9 vorgesehen sind, die über Seilzugvorrichtungen 10, 11, 12, 13 betätigbar sind. Diese Seilzugvorrichtungen 10, 11, 12, 13 bestehen jeweils aus einer Seilwinde 14 und zwei Zugseilen 15, 16, die durch eine Seilwinde 14 gemeinsam betätigt werden und über Umlenkrollen 17, 18 abstandsweise an einem Abschnitt 6; 7; 8; 9 angreifen.

In Fig. 2 ist eine Anordnung eines der Zugseile 15, 16 in einem Schürzen-Segment 5 dargestellt. Die Zugseile 15, 16 sind an einem oberen inneren Ende des Finger Skirts 4 befestigt. Von diesem Befestigungspunkt 19 führen zwei Teilzugseile 20, 21 zum Boden 22 des Schürzen-Segmentes 5 und zur Verbindungsstelle zwischen dem Back Skirt 3 und dem Finger Skirt 4. Dadurch wird bei einer seitlichen Auslenkung der Abschnitte 6, 7, 8, 9, beispielsweise durch Zugkräfte, gewährleistet, daß die Form der Schürzen-Segmente 5 nicht verändert wird.

Als Rückstellelement für die Zugseile 15, 16 dient eine Druckfeder 23, die zwischen der Umlenkrolle 17; 18, bzw. dem Ende des Schlauches 24, der zweckmäßigerweise die Zugseile 15, 16 umhüllt und dem Befestigungspunkt 19 angeordnet ist. Dadurch wird gewährleistet, daß die Zugseile 15, 16 ständig unter Vorspannung gehalten werden können.

Die seitliche Auslenkung der Abschnitte 6, 7, 8, 9, beispielsweise nach außen, kann einfach dadurch erfolgen, daß die Zugseile 15, 16 um den gewünschten Betrag nachgelassen werden. Die eigentliche Auslenkung der Abschnitte 6, 7, 8, 9 erfolgt durch den Überdruck im Luftkissen. Bei einer erforderlichen Auslenkung der Abschnitte 6, 7, 8, 9 nach innen, sind die Zugseile 15, 16 auf der entsprechenden Seilwinde 14 entgegen dem Überdruck des Luftkissens aufzuwickeln.

Auf Grund dessen, daß jedem Abschnitt 6; 7; 8; 9 eine entsprechende Seilzugvorrichtung 10; 11; 12; 13 zugeordnet ist, können die Abschnitte 6, 7, 8, 9 unabhängig voneinander bewegt werden, wie noch darzulegen ist.

Zur Vermeidung einer unkontrollierten Bewegung der Finger Skirts 4 im Falle eines Seilrisses eines der Zugseile 15, 16 ist zwischen dem Befestigungspunkt 19 und der Umlenkrolle 15; 16 ein Sicherungsseil 25 befestigt. Dadurch wird die seitliche Auslenkbarkeit der Finger Skirts 4 begrenzt und gewährleistet, daß die Fahrt ohne wesentliche Einschränkungen fortgesetzt werden kann.

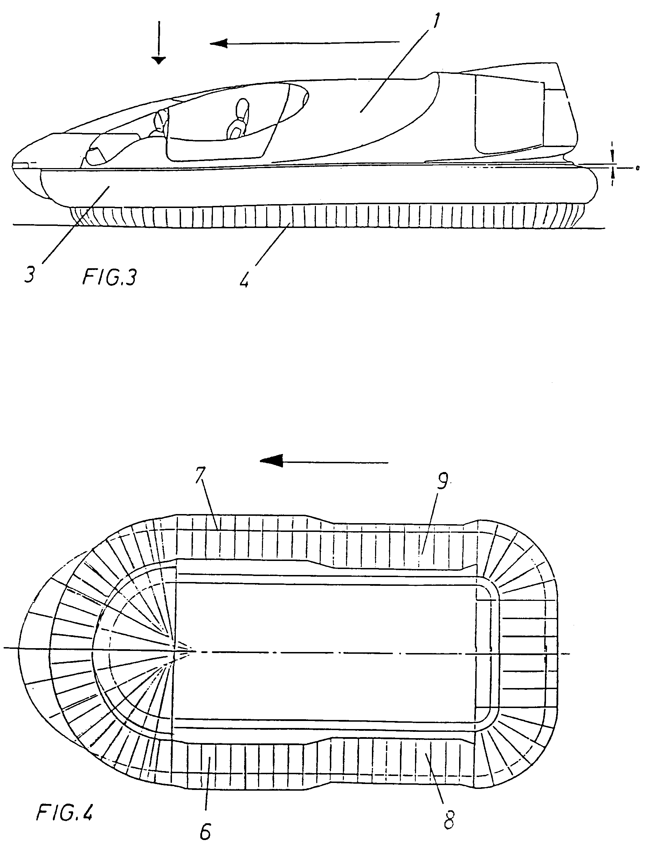

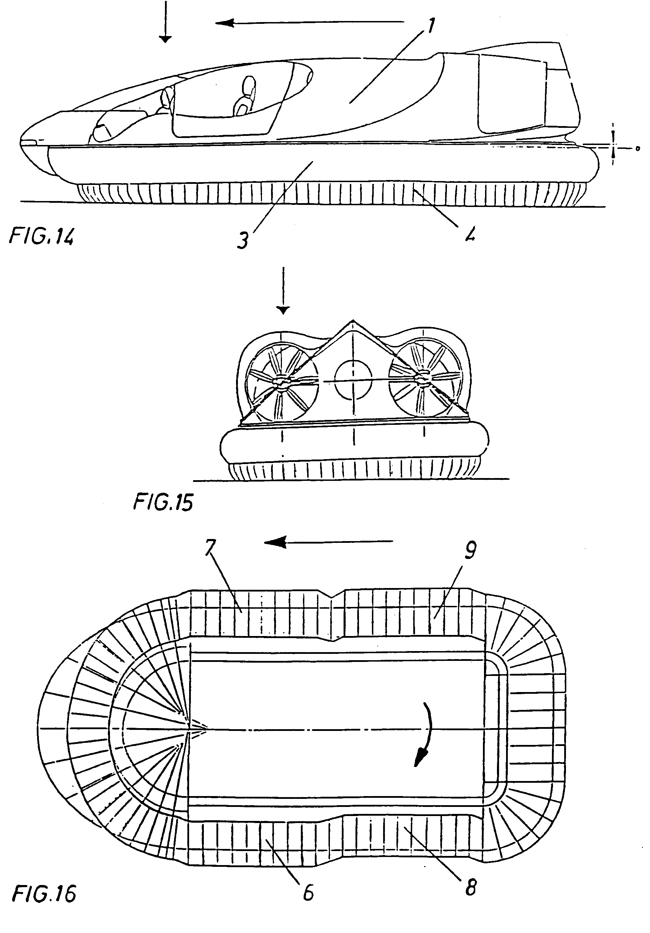

In den Fig. 3 bis 22 sind unterschiedliche Trimmmöglichkeiten für des Luftkissenfahrzeug veranschaulicht.

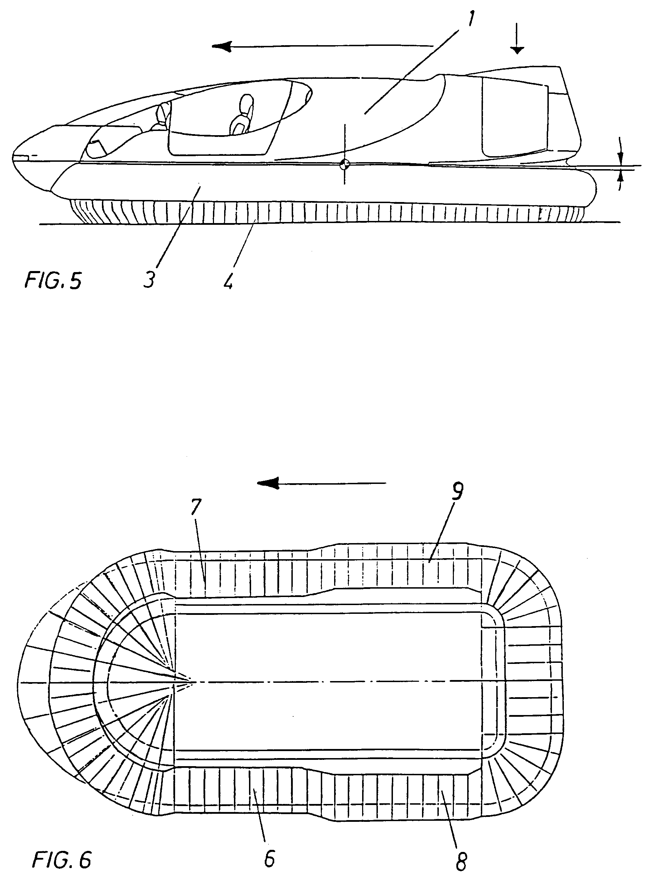

In den Fig. 3 und 4 ist die Trimmung des Luftkissenfahrzeuges bei kopflastiger Schwerpunktverschiebung dargestellt. In diesem Fall werden die Abschnitte 6, 7 nach außen und die Abschnitte 8, 9 nach innen abgelenkt. Dadurch wird der Auftriebsschwerpunkt des Luftkissens nach vorn verlagert und die Verschiebung des Massenschwerpunktes nach vorn ausgeglichen. Bei einer nur geringfügigen Verlagerung des Massenschwerpunktes in Richtung zum Fahrzeugbug kann es auch ausreichend sein, nur die zwei vorderen einander gegenüberliegenden Abschnitte 6, 7 nach außen auszulenken.

In den Fig. 5 und 6 ist der analoge Fall dargestellt, bei dem der Massenschwerpunkt in Richtung zum Fahrzeugheck verlagert ist. Die Abschnitte 6, 7, 8, 9 sind entsprechend nach außen und nach innen zu verlagern.

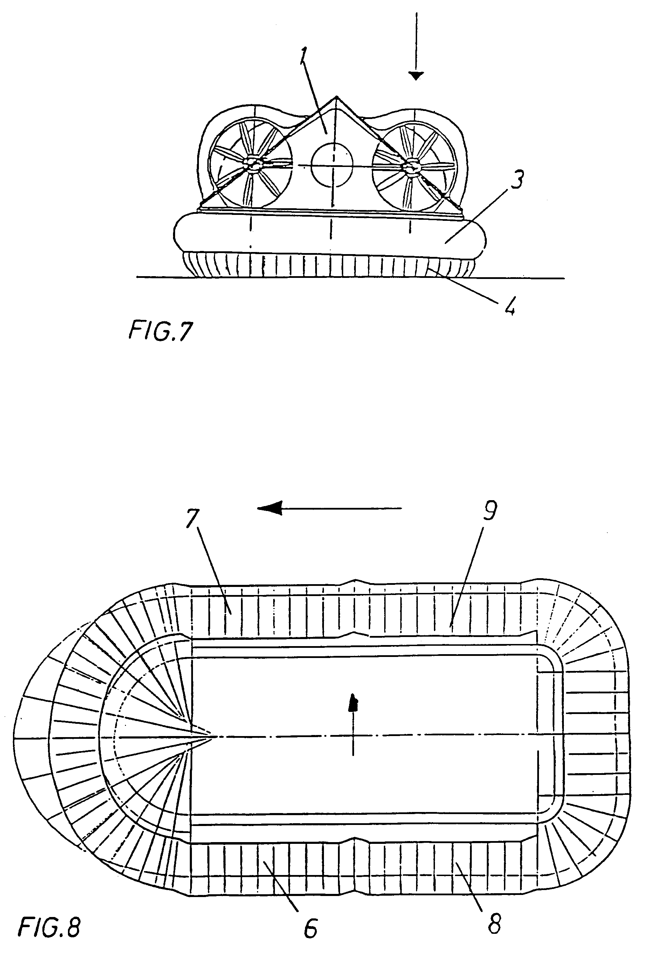

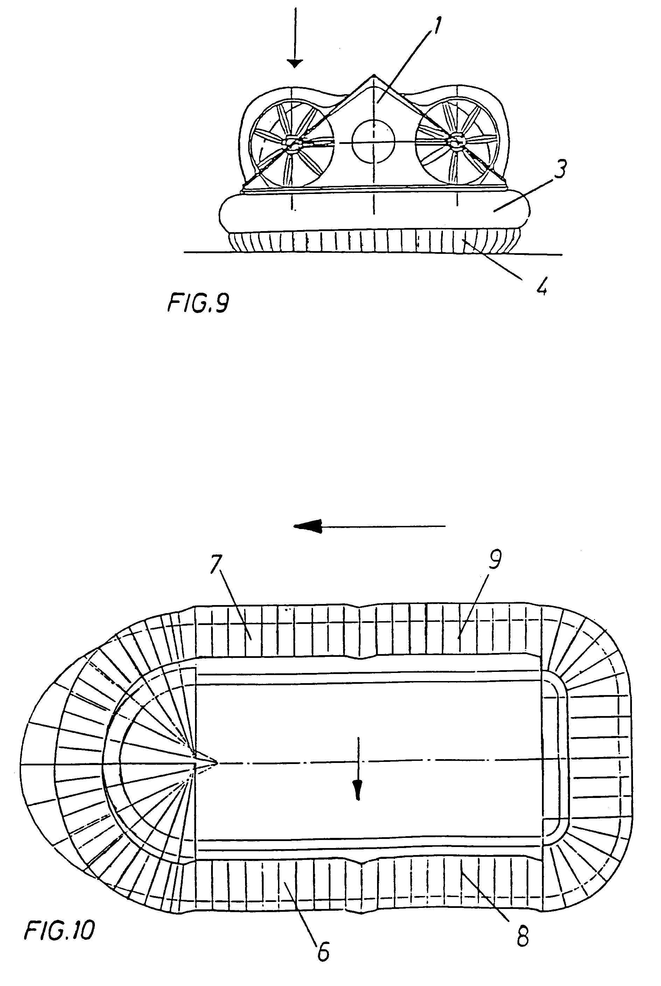

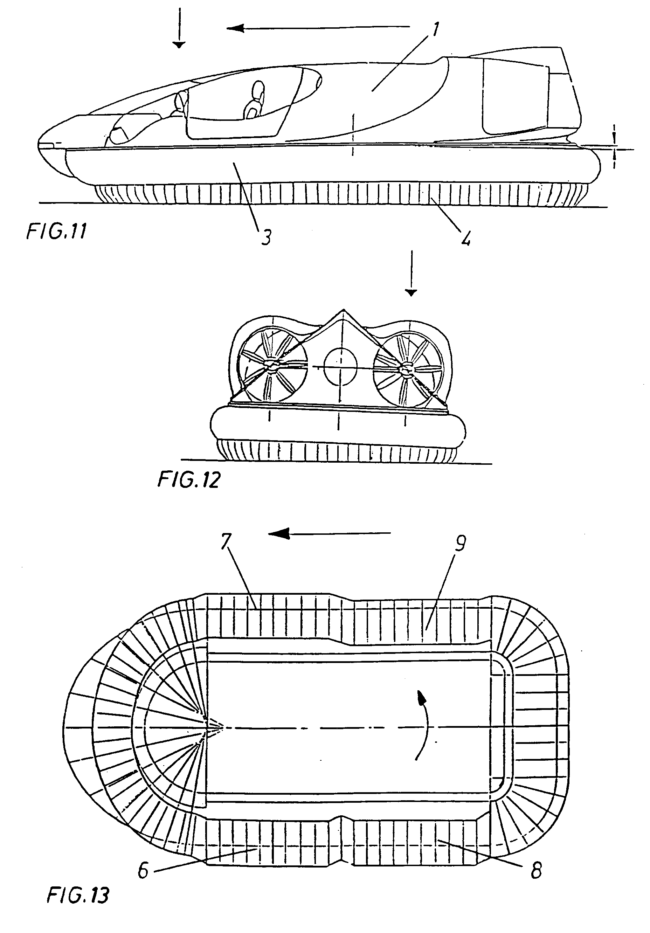

Es ist auch möglich, beispielsweise für die Kurvenfahrt eine gezielte Neigung des Luftkissenfahrzeuges in Richtung der vorgesehenen Kurve hervorzurufen, indem jeweils die Abschnitte (6, 8; 7, 9) beider Seiten in die gleiche Richtung ausgelenkt werden. Soll beispielsweise eine Neigung nach rechts (Rechtskurve) hervorgerufen werden (Fig. 7 und 8), so sind die Abschnitte 7, 9 und 6, 8 nach links (in Fahrtrichtung gesehen) auszulenken. Bei einer gewünschten Neigung nach links (Fig. 9 und 10) sind die Abschnitte ( 7, 9 und 6, 8 entsprechend nach rechts auszulenken.

Soll eine kopflastige Verlagerung des Massenschwerpunktes ausgeglichen werden und gleichzeitig eine Drehung hinten nach rechts vollführt werden (Fig. 11 bis 13), so sind die vorderen Abschnitte 6, 7 nach außen und die hinteren Abschnitte 8, 9 gleichsinnig nach links zu bewegen. Diese unsymmetrische verlagerung der Abschnitte 6, 7, 8, 9 führt zu einer gezielten Neigung des Luftkissenfahrzeuges und dadurch zu einem unterschiedlichen Abstand der Finger Skirts zum Boden bzw. der Wasseroberfläche. Dadurch ensteht hinten links ein verstärktes Abblasen der im Luftkissen komprimierten Luft und in der Folge durch diese zusätzliche Kraftkomponente die Drehung hinten nach rechts.

Ist eine Drehung des Luftkissenfahrzeuges bei kopflastiger Verlagerung des Massenschwerkpunktes nach links zu vollführen, so sind die vorderen Abschnitte (6, 7), wie vorstehend beschrieben, nach außen und die hinteren Abschnitte 8, 9 nach rechts auszulenken.

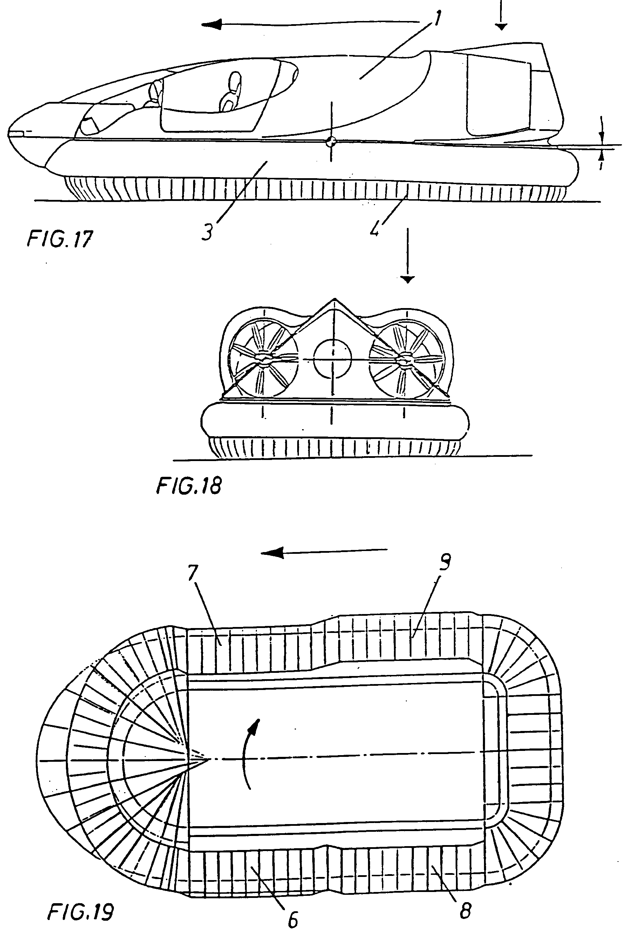

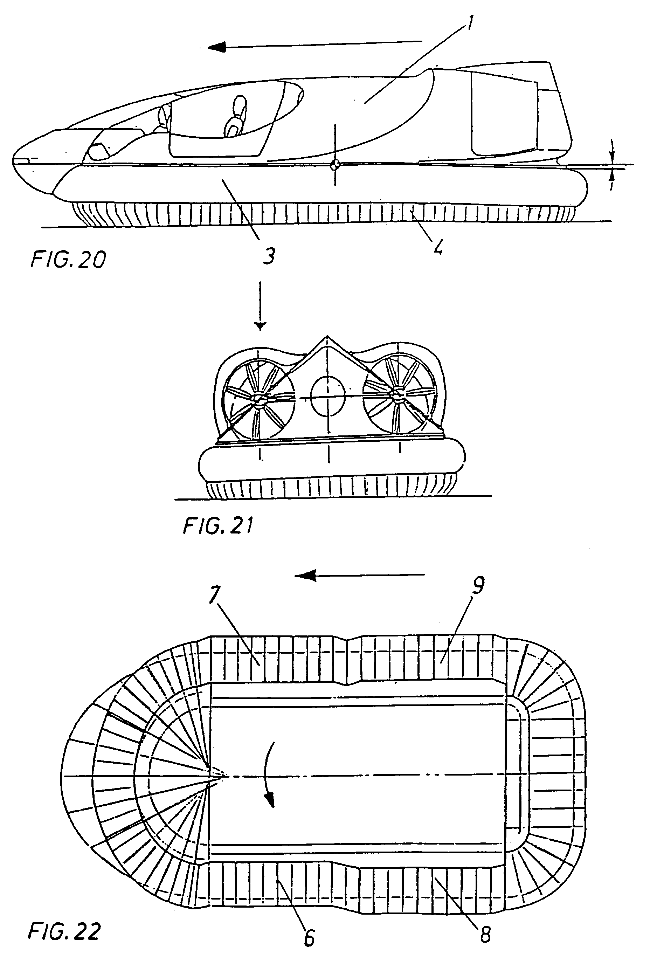

Gleichfalls ist es möglich, auf entsprechende Weise, wie vorstehend beschrieben, eine Fahrzeugdrehung vorn nach rechts (Fig. 17 bis 19) oder vorn nach links (Fig. 20 bis 22) zu vollführen. In diesem Fall sind die hinteren Abschnitte 8, 9 nach außen und die vorderen Abschnitte 6, 7 gleichsinnig nach links bzw. rechts zu verschieben.

Durch die vorstehend beschriebenen Trimmvarianten können die unterschiedlichsten Massenverlagerungen ausgeglichen werden, wobei gleichzeitig eine wesentliche Erhöhung der Manövrierfähigkeit sowohl im Stand, als auch bei der Kurvenfahrt erreicht wird. Bei der Einleitung einer Kurvenfahrt ist ledichlich eine Verlagerung des Auftriebsschwerpunktes des Luftkissens entgegen der vorgesehenen Kurve notwendig, so daß sich das Luftkissenfahrzeug in die Kurve neigt. Dadurch können bedeutend engere Kurven durchfahren werden, was die Fahrsicherheit bedeutend verbessert.

Weiterhin ist es möglich, alle Abschnitte 6, 7, 8, 9 gleichzeitig nach innen zu ziehen. Dadurch entsteht eine Druckerhöhung im Luftkissen, so daß einem Eindrücken der elastischen Schürze 2 im Bugbereich, wie dies z.B. bei Wellenschlag der Fall sein könnte, vorgebeugt werden kann. Diese Maßnahme kann auch zum leichteren Überwinden von unerwartet aufgetauchten Hindernissen angewendet werden.

### Bezugszeichenliste

- 1: Karosserie
- 2: elastische Schürze
- 3: Back Skirt
- 4: Finger Skirt
- 5: Schürzen-Segment
- 6: Abschnitt
- 7: Abschnitt
- 8: Abschnitt
- 9: Abschnitt
- 10: Seilzugvorrichtung
- 11: Seilzugvorrichtung
- 12: Seilzugvorrichtung
- 13: Seilzugvorrichtung
- 14: Seilwinde
- 15: Zugseil
- 16: Zugseil
- 17: Umlenkrolle
- 18: Umlenkrolle
- 19: Befestigungspunkt
- 20: Teilzugseil
- 21: Teilzugseil
- 22: Boden
- 23: Druckfeder
- 24: Schlauch
- 25: Sicherungsseil

## Patentansprüche

1. Luftkissenfahrzeug mit wenigstens einem Kompressortriebwerk zur Erzeugung eines Luftkissens, bei dem das Luftkissen seitlich durch eine umlaufende elastische Schürze (2), bestehend aus einem Back Skirt (3) und einem Finger Skirt (4) begrenzt wird, deren seitliche, parallel zueinander liegenden Bereiche in jeweils zwei unabhängig voneinander verlagerbare Abschnitte (6; 7; 8; 9) unterteilt und mittels Zugseile (15; 16), die an Schürzen-Segmenten (5) des Finger Skirts (4) angreifen, verlagerbar sind und bei dem als statische Trimmung der Auftriebsschwerpunkt des Luftkissens gegenüber dem Massenschwerpunkt durch gruppenweises seitliches Verstellen der Finger Skirts (4) verschoben wird, **dadurch gekennzeichnet**, daß für jeden unabhängig verlagerbaren Abschnitt (6; 7; 8; 9) jeweils zwei Zugseile (15, 16) vorgesehen sind, die im Abstand zueinander über Umlenkrollen (17, 18) geführt, jeweils an einem Schürzen-Segment (5) des Finger Skirts (4) angreifen und daß sich jedes Zugseil (15, 16) innerhalb des Schürzen-Segmentes (5) in zwei Teilzugseile (20, 21) aufteilt, von denen ein Teilzugseil (20) am Boden des Schürzen-Segmentes (5) und das andere Teilzugseil (21) an der Verbindungsstelle zwischen dem Back Skirt (3) und dem Finger Skirt (4) angreift.

2. Luftkissenfahrzeug nach Anspruch 1, **dadurch gekennzeichnet**, daß zwischen der Umlenkrolle (17; 18) und dem Befestigungspunkt (19) des Seilzuges am Schürzensegment (5) eine Druckfeder (23) angeordnet ist.

3. Luftkissenfahrzeug nach Anspruch 1 und 2, **dadurch gekennzeichnet**, daß zwischen dem Befestigungspunkt (19) des Seilzuges und der Umlenkrolle (17; 18) ein Sicherungsseil (25) befestigt ist.

4. Luftkissenfahrzeug nach den Ansprüchen 1 bis 3, **dadurch gekennzeichnet**, daß für jeden seitlich verlagerbaren Abschnitt (6, 7, 8, 9) ein Steuerelement vorgesehen ist.

5. Luftkissenfahrzeug nach Anspruch 4, **dadurch gekennzeichnet**, daß das Steuerelement aus einer Seilzugvorrichtung (10, 11, 12, 13) besteht, die einerseits am Finger Skirt und andererseits mit dem Antriebselement versehen ist.

6. Luftkissenfahrzeug nach Anspruch 4 und 5, **dadurch gekennzeichnet**, daß das Antriebselement aus einer Seilwinde (14) besteht, die ortsfest unterhalb der Karosserie (1) des Luftkissenfahrzeuges befestigt ist.

7. Luftkissenfahrzeug nach einem der Ansprüche 1 bis 6, **dadurch gekennzeichnet**, daß die Abschnitte (6, 7, 8, 9) einer Seite in eine Richtung ausgelenkt sind.

8. Luftkissenfahrzeug nach einem der Ansprüche 1 bis 6, **dadurch gekennzeichnet**, daß die Abschnitte (6, 7, 8, 9) beider parallelen Bereiche gleichsinnig ausgelenkt sind.

9. Luftkissenfahrzeug nach einem der Ansprüche 1 bis 6, **dadurch gekennzeichnet**, daß nur einer der Abschnitte (6, 7, 8, 9) ausgelenkt ist.

10. Luftkissenfahrzeug nach einem der Ansprüche 1 bis 6, **dadurch gekennzeichnet**, daß zwei gegenüber befindliche Abschnitte (6, 7, 8, 9) gleichsinnig oder gegensinnig ausgelenkt sind.

11. Luftkissenfahrzeug nach einem der Ansprüche 1 bis 6, **dadurch gekennzeichnet**, daß zwei diagonal gegenüberbefindliche Abschnitte (6, 7, 8, 9) gleichsinnig ausgelenkt sind.

12. Luftkissenfahrzeug nach einem der Ansprüche 1 bis 6**, dadurch gekennzeichnet**, daß die Abschnitte (6, 7, 8, 9) beider Seiten gleichzeitig nach innen gezogen sind.

## Claims

1. Hovercraft with at least one compressor mechanism to generate an air-cushion, in which the air-cushion is laterally limited by a peripheral elastic skirt (2) consisting of a back skirt (3) and a finger skirt (4), the lateral areas of which are parallel to each another and are each divided into two sections (6; 7; 8; 9) which can be shifted independently of one another and which are shiftable via tension cables (15; 16) which act at skirt segments (5) of the finger skirt (4), and in which as a static trimmer the centre of buoyancy of the air-cushion is displaced in relation to the centre of gravity by grouped, lateral adjustment of the finger skirt (4), **characterised in that** each independently shiftable section (6; 7; 8; 9) is provided with two tension cables (15, 16) which, arranged at a distance from each other and guided via deflection rollers (17, 18), each act on one skirt segment (5) of the finger skirt (4) and that each tension cable (15, 16) is divided within the skirt segment (5) into two partial tension cables (20, 21), of which one partial tension cable (20) acts on the base of the skirt segment (5) and the other partial tension cable (21) acts on the connection between the back skirt (3) and the finger skirt (4).

2. Hovercraft according to claim 1, **characterised in that** a compression spring (23) is arranged between the deflection roller (17; 18) and the connection point (19) of the cable control to the skirt segment (5).

3. Hovercraft according to claims 1 and 2, **characterised in that** a safety cable (25) is fitted between the connection point (19) of the cable control and the deflection roller (17; 18).

4. Hovercraft according to claims 1 to 3, **characterised in that** each laterally shiftable section (6, 7, 8, 9) is provided with a control component.

5. Hovercraft according to Claim 4, **characterised in that** the control component comprises a cable control device (10, 11, 12, 13), one end of which acts on the finger skirt and the other end of which is provided with a drive component.

6. Hovercraft according to claims 4 and 5, **characterised in that** the drive component comprises a cable winch (14) fixed in place beneath the bodywork (1) of the hovercraft.

7. Hovercraft according to one of claims 1 to 6, **characterised in that** the sections (6, 7, 8, 9) of one side are deflected in one direction.

8. Hovercraft according to one of claims 1 to 6, **characterised in that** the sections (6, 7, 8, 9) of both parallel areas are deflected in the same direction.

9. Hovercraft according to one of claims 1 to 6, **characterised in that** only one of the sections (6, 7, 8, 9) is deflected.

10. Hovercraft according to one of claims 1 to 6, **characterised in that** two opposite sections (6, 7, 8, 9) are deflected in the same direction or in opposite directions.

11. Hovercraft according to one of claims 1 to 6, **characterised in that** two diagonally opposite sections (6, 7, 8, 9) are deflected in the same direction.

12. Hovercraft according to one of claims 1 to 6, **characterised in that** the sections (6, 7, 8, 9) of both sides are simultaneously pulled inwards.

## Revendications

1. Véhicule à coussin d'air comportant au moins un groupe motocompresseur pour la création d'un coussin d'air, dans lequel le coussin d'air est limité lateralement par une jupe elastique (2) qui s'étend tout autour et se compose d'une jupe de fond (Back Skirt) (3) et d'une jupe digitée (Finger Skirt) (4), dont les parties latérales, parallèles l'une à l'autre, sont subdivisées chacune en deux sections (6;7;8;9) qui sont mobiles indépendamment l'une de l'autre et qui peuvent être déplacées au moyen de câbles de traction (15;16) qui agissent sur des segments de jupe (5) de la jupe digitée (4), et dans lequel, pour l'assiette statique, le centre de pousseé du coussin d'air est déplacé par rapport au centre de gravité des masses par réglage latéral, par groupes, de la jupe digitée (4), caractérisé en ce qu'il est prévu, pour chacune des sections (6;7;8;9) mobiles indépendamment, deux câbles de traction (15,16) qui sont guidés à distance l'un de l'autre par des poulies de déviation (17,18) et agissent chacun dur un segment de jupe (5) de la jupe digitée (4), et en ce que chaque câble de traction (15,16) se divise, à l'intérieur du segment de jupe (5), en deux câbles de traction partiels (20, 21) dont l'un (20) agit sur la base du segment de jupe (5) et dont l'autre (21) agit sur la jointure entre la jupe de fond (3) et la jupe digitée (4).

2. Véhicule à coussin d'air selon la revendication 1, caractérise en ce qu'un ressort de compression (23) est dispose entre la poulie de déviation (17;18) et le point de fixation (19) de la commande par câble au segment de jupe (5).

3. Véhicule à coussin d'air selon la revendication 1 ou 2, caractérisé en ce qu'un câble de sécurité (25) est fixé entre le point de fixation (19) de la commande par câble et la poulie de déviation (17;18).

4. Véhicule à coussin d'air selon l'une quelconque des revendications 1 à 3, caractérisé en ce qu'un élément de commande est prévu pour chaque section (6,7,8,9) mobile latéralement.

5. Véhicule à coussin d'air selon la revendication 4, caractérisé en ce que l'élément de commande est constitué par un dispositif de commande par câble (10,11,12,13) qui est fixé d'un côté à la jupe digitée et est muni, de l'autre côté, d'un élément d'entraînement.

6. Véhicule à coussin d'air selon la revendication 4 ou 5, caractérisé en ce que l'élément d'entraînement est constitué par un treuil à câble (14) qui est fixé à poste fixe au-dessous de la carrosserie (1) du véhicule a coussin d'air.

7. Véhicule à coussin d'air selon l'une quelconque des revendications 1 à 6, caractérisé en ce que les sections (6,7,8,9) d'un côté sont déviées dans une direction.

8. Véhicule à coussin d'air selon l'une quelconque des revendications 1 à 6, caractérisé en ce que les sections (6,7,8,9) des deux parties parallèles sont déviées dans le même sens.

9. Véhicule à coussin d'air selon l'une quelconque des revendications 1 à 6, caractérisé en ce qu'une seule des sections (6,7,8,9) est déviée.

10. Véhicule à coussin d'air selon l'une quelconque des revendications 1 à 6, caractérisé en ce que deux sections (6,7,8,9) se trouvant en face l'une de l'autre sont déviées dans le même sens ou en sens opposés.

11. Véhicule à coussin d'air selon l'une quelconque des revendications 1 à 6, caractérisé en ce que deux sections (6,7,8,9) opposées en diagonale sont déviées dans le même sens.

12. Véhicule à coussin d'air selon l'une quelconque des revendications 1 à 6, caractérise en ce que les sections (6,7,8,9) des deux côtés sont attirées vers l'intérieur en même temps.
